# EUROPEAN PATENT SPECIFICATION

(11) **EP 2 476 161 B1**
(45) Date of publication and mention of the grant of the patent: **17.08.2016**
(21) Application number: 10752384.7
(22) Date of filing: 07.09.2010
(51) Int. Cl.: H01M 4/86, H01M 12/08

(54) **GASEOUS PRODUCT GENERATOR**
GASFÖRMIGER PRODUKTERZEUGER
GÉNÉRATEUR DE PRODUITS GAZEUX

(30) Priority: 09.09.2009 GB 0915752; 09.09.2009 EP 09275072
(43) Date of publication of application: 18.07.2012
(73) Proprietor: BAE Systems PLC, London SW1Y 5AD (GB)
(72) Inventor: HUCKER, Martyn John, South Gloucestershire BS34 7QW (GB)
(74) Representative: BAE SYSTEMS plc Group IP Department
(86) International application number: PCT/GB2010/051479
(87) International publication number: WO 2011/030137

(56) References cited:
- US-A- 5 208 526
- US-A- 5 219 672

## Description

This invention relates to a gaseous product generator and an associated method of generating a gaseous product, with particular, but by no means exclusive, reference to applications on-board aircraft.

It is well known that aircraft require sources of oxygen for passenger and crew use in the event of loss of cabin pressure, and also nitrogen gas (or at least an oxygen depleted air supply) for inerting fuel tanks so as to lessen the risk of explosions. There are a number of systems which have been used for one or both of these purposes. Hollow fibre membrane (HFM) technology has been used to produce nitrogen enriched air for fuel tank inerting purposes. The HFM process involves oxygen separation from a high pressure air source through polymeric fibres. Advantages are that the separation process requires no moving parts. However, the technique has no inherent gas storage capability, and does not generate an oxygen supply. Conversely, ceramic membrane (CM) technology is used for oxygen production, but not the production of nitrogen enriched air. Again, there are no moving parts associated with the gas separation step. The total air liquefaction of oxygen and nitrogen technique (TALON) utilises liquefaction and air distillation columns to provide oxygen and liquefied nitrogen enriched air. In the related system for aircraft fuel tank inerting (SAFTI), liquefied nitrogen enriched air only is produced. These systems are complex, and require moving parts. Pressure swing adsorption (PSA) uses zeolite molecular sieves for oxygen or nitrogen production. There is no inherent storage capability, and the system is inflexible in that once configured a system will only produce the maximum amount of oxygen. In general, the systems are heavy and consume relatively large amounts of energy.

US5208526 discloses a metal-air cell which has the inherent effect of being a gaseous product generator.

The present invention, in at least some of its embodiments, provides oxygen generation and/or oxygen depleted air generation in a relatively simple system. Additionally, the present invention has an inherent oxygen storage capability, and there are no moving parts associated with the gas separation step.

According to a first aspect of the invention there is provided a gaseous product generator including:
at least one rechargeable metal-air cell operable to provide the gaseous product; and
a manifold arrangement, the manifold arrangement having an inlet structure, an outlet structure and one or more valves, the inlet structure allowing a feed atmosphere to be introduced to the metal-air cell, the outlet structure transporting the gaseous product to an intended point of use thereby to provide an environmentally enhancing function and the one or more valves controlling the supply of gas to the metal-air cell and/or the transportation of gaseous product from the metal-air cell.

Preferably, the rechargeable metal-air cell is a rechargeable lithium-air cell. Other forms of metal-air cells, such as an aluminium-air cell or a zinc-air cell may be used.

Typically, a rechargeable metal-air cell includes an anode formed from an electropositive metal, an air cathode, and an electrolyte in communication with the anode and also in communication with the air cathode. The air cathode has a surface which is in communication with the feed atmosphere, possibly through an oxygen permeable interface structure such an oxygen permeable membrane. The cell may include one or more separators, such as a separator positioned between the anode and the electrolyte and/or a separator positioned between the air cathode and electrolyte. Generally, the anode is in conductive communication with an anode current collector.

Metal-air cells of this type are well known as rechargeable electrochemical cells which are used to provide a supply of electrical energy. The fundamental physical process behind the storage and subsequent production of electrical energy is a following reversible chemical reaction wherein gaseous oxygen is absorbed by the metal-air cell when it is discharged, and oxygen is released by the metal-air cell when it is charged. The present inventor has realised that oxygen production and/or oxygen absorption associated with the use of metal-air cells can be exploited for useful purposes. In particular, oxygen produced while a metal-air cell is charging and/or an oxygen depleted feed atmosphere produced while a metal-air cell is discharging can be utilised in environmentally enhancing functions.

Preferably, the manifold arrangement includes an oxygen supply system for supplying oxygen generated by charging the metal-air cell to an intended point of use. The oxygen supply system may include at least a portion of the outlet structure in the form of an oxygen outlet, and may further include an oxygen inlet structure for introducing an oxygen containing gas stream to the metal-air cell whilst oxygen is generated by charging the metal-air cell. The oxygen can be supplied for breathing purposes in a number of possible application areas, such as in aircraft, buildings or medical applications. In aircraft, the oxygen can be supplied continuously, or as an additional, on-demand source of oxygen, for example during an emergency.

Additionally, or alternatively, at least a portion of the outlet structure of the manifold may be in the form of an oxygen depleted feed atmosphere outlet for transporting an oxygen depleted feed atmosphere generated by discharging the metal-air cell to an intended point of use. The oxygen depleted feed atmosphere can be used for a variety of purposes in which it is desirable to provide an essentially inert atmosphere, such as inerting fuel tanks and in other fire or explosion prevention or fire fighting applications. Other applications are as a nitrogen gas generator, as a source of gas for use in inflating devices such as safety devices and flotation devices, and as a propellant for other media.

Typically, the feed atmosphere is air.

Advantageously, the generator further includes a valve control system for controlling the operation of the valves.

The generator may utilise a single metal-air cell. Preferably, however, the generator includes a plurality of metal-air cells and a metal-air cell control system which is configured to control the operation of the metal-air cells so that, when one metal-air cell is charging, at least one other metal-air cell is discharging.

The valve control system and the metal-air cell control system may be provided as separate systems, but preferably they form part of a single control system which controls the metal-air cells so that a desired scheme of cell discharging/charging is provided and controls the valves to ensure that the correct flow of gas is achieved. A microprocessor based control system may be utilised.

Advantageously, the rechargeable metal-air cell includes an elongate air cathode which, either wholly or in combination with the manifold arrangement, defines an elongate passageway along which gases can flow during charging and discharging of the metal-air cell. In this way, it is possible to provide a large air cathode surface area whilst minimising any restriction to the flow of gases. Preferably, the metal-air cell is in the form of a tubular structure having an inner wall formed by the elongate air cathode, wherein the elongate passageway is an interior bore of the tubular structure defined by the elongate air cathode. For the avoidance of doubt, a feature such as an oxygen permeable membrane which is positioned on the surface of the air cathode side of the metal-air cell, is considered to be part of the air cathode.

The elongate air cathode may be corrugated or fluted.

Whilst the primary purpose of the present invention is the generation of a gaseous product, it is advantageous that energy recovery is possible during discharging of the metal-air cell. The actual energy recovered during discharge of the metal-air cell may be stored, or used for a desired purpose, such as charging another cell, operating equipment such as valves, pumps etc, or other purposes.

Although it is considered advantageous that the present invention can be used as on-off demand system, it is possible to store the gaseous product by any suitable means, such as by liquefaction.

According to a second aspect of the invention there is provided an aircraft having a gaseous product generator according to the first aspect of the invention.

The inlet structure of the manifold arrangement may be configured to admit air from outside of the aircraft to the metal-air cell as the feed atmosphere.

The gaseous product may be oxygen produced by charging the metal-air cell, and the manifold arrangement may transport the oxygen to a pre-determined location on-board the aircraft for breathing purposes.

The gaseous product may be an oxygen depleted atmosphere produced by discharging the metal-air cell, and the manifold arrangement may transport the oxygen depleted atmosphere to a pre-determined location on-board the aircraft for atmosphere inerting purposes. The manifold arrangement may transport the oxygen depleted atmosphere to a fuel tank for inerting purposes.

According to a third aspect of the invention there is provided a method of generating a gaseous product including the steps of;
providing one or more rechargeable metal-air cells;
operating the metal-air cells to generate a gaseous product;
transporting the gaseous product to an intended point of use and providing an environmentally enhancing function with the gaseous product.

The metal-air cell may be disposed on an aircraft, and the environmentally enhancing function may be provided on-board the aircraft.

The gaseous product may be oxygen, the metal-air cell being charged in order to provide the oxygen, and the environmentally enhancing function may be the provision of oxygen in a pre-determined location for breathing purposes.

The gaseous product may be an oxygen depleted atmosphere, the metal-air cell being discharged in order to provide the oxygen depleted atmosphere, and the environmentally enhancing function may be the inerting of an atmosphere in a pre-determined location.

According to a fourth aspect of the invention there is provided the use of at least one rechargeable metal-air cell to generate a gaseous product which is transported to an intended point of use thereby to provide an environmentally enhancing function.

Whilst the invention has been described above, it extends to any inventive combination of the features set out above, or in the following description, drawings and claims.

Embodiments of gaseous product generators in accordance with the invention will now be described with reference to the accompanying drawings, in which:-
Figure 1 is a schematic diagram of an embodiment of the invention;
Figure 2 is a cross section view of a metal-air cell having an enhanced cathode surface area;
Figure 3 shows cross sectional views of alternative metal-air cells having enhanced cathode surface areas; and
Figure 4 is a semi-schematic diagram of an aircraft equipped with a gas generator of the invention.

Reversible lithium-air cells are secondary electrochemical cells which utilise the following reversible electrochemical reaction:

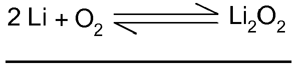

The Li-air cell absorbs oxygen on discharge, and gives up oxygen on charge via the formation of lithium peroxide. The present inventor has realised that Li-air cells and other metal-air cells might be employed as oxygen generators and/or as a means of generating oxygen depleted air for a variety of purposes.

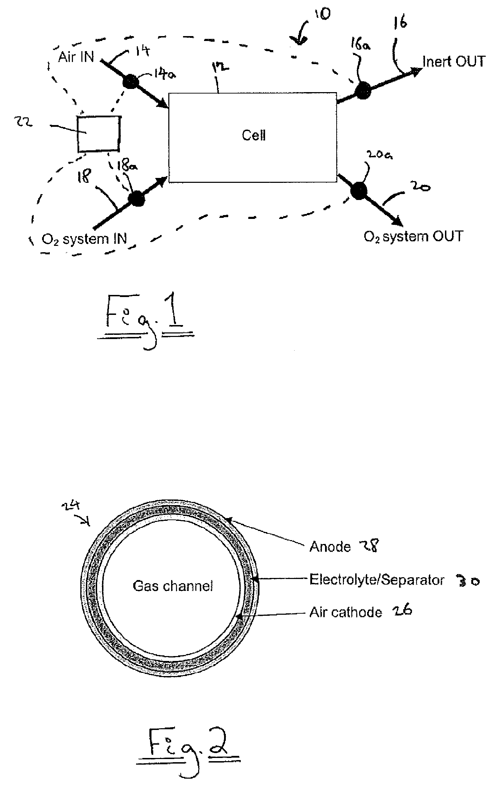

In order to function as a gas generator, the Li-air cell is provided with an appropriate manifold arrangement enabling gas to be supplied and removed from the Li-air cells required. Figure 1 is a schematic diagram of a gas generator, shown generally at 10, which comprise a Li-air cell 12, an air inlet 14, an outlet for oxygen depleted air 16, an inlet for an oxygen supply system 18, and an outlet for the oxygen supply system 20. Each of these gas conducting lines has an associated valve 14a, 16a, 18a, 20a. The operation of the valves can be controlled by an appropriate control system 22. The valve sequence for a single cell operating as a gas generator is as shown in Table 1.

**TABLE 1 valve sequence for single metal-air cell**

| **Cell Condition** | **Air IN** | **O₂ IN** | **Inert OUT** | **O₂ OUT** |
|---|---|---|---|---|
| Charging | CLOSED | OPEN | CLOSED | OPEN |
| Discharging | OPEN | CLOSED | OPEN | CLOSED |

Although dependent on the precise application envisaged, in many situations it is advantageous to utilise two or more Li-air cells in a generator. In this way, at least one cell can be charging whilst the other is discharging. An appropriate control system can be used to operate the cell in a co-ordinated manner. It is envisaged that even systems which utilise a plurality of metal-air cells can be relatively lightweight.

Enhanced efficiency can be obtained if the Li-air cell is arranged in some form of tubular structure in order to maximise the surface area of the air cathode whilst providing minimal restriction to the gas flow. Figure 2 shows such an arrangement, wherein a metal-air cell, shown generally at 24, is in the form of a tube wherein the air cathode 26 forms the inner wall of the tube, and thus defines an inner gas channel along which gas can flow. The metal-air cell is arranged in a concentric manner with the anode 28 acting as the outer wall of the tubular structure, with an electrolyte/separator structure 30 being disposed concentrically between the air cathode 26 and anode 28. The metal-air cell shown in Figure 2 is of elongate form in order to provide an inner cathode surface area.

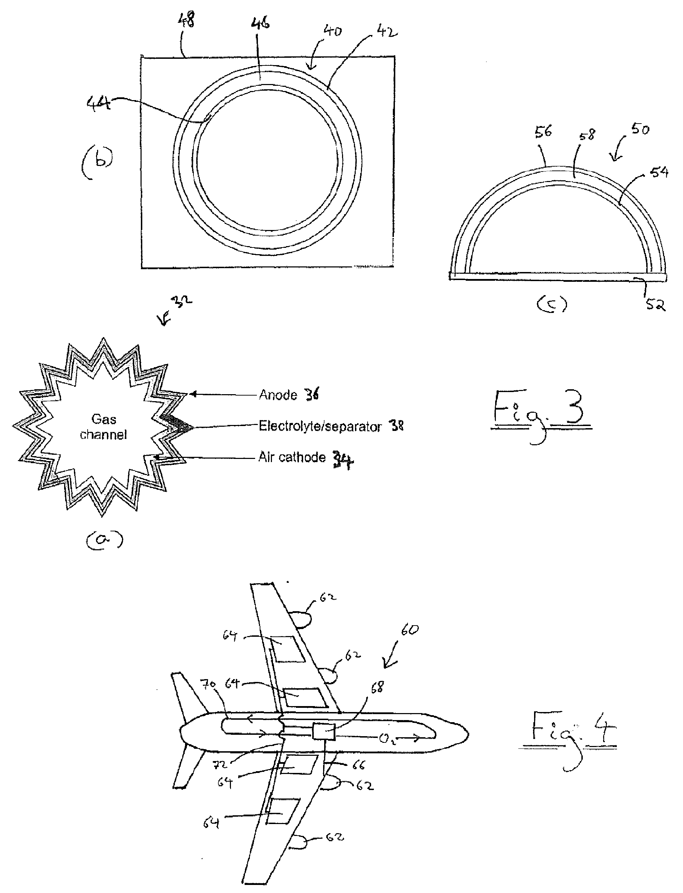

Figure 3a shows a related embodiment of a metal-air cell, depicted generally at 32, in which the metal-air cell again is in the form of a tubular structure. The air cathode 34 forms an inner wall of the tubular structure and defines an inner passageway along which gases can flow. The anode 36 acts as an outer wall of the structure, and an electrolyte/separator 38 is disposed between the anode 36 and air cathode 34. In the embodiment shown in Figure 3a, the components of the metal-air cell, in particular the air cathode 34, are corrugated, in order to provide an enhanced cathode surface area.

Figure 3b shows a further embodiment of a metal-air cell, depicted generally at 40, in which the metal-air cell again is in the form of a tubular structure. In this embodiment, the air cathode 42 forms an outer wall of the tubular structure, and the anode 44 acts as an inner wall of the structure. An electrolyte/separator 46 is disposed between the anode 44 and the air cathode 42. In the embodiment shown in Figure 3b, the anode 44 defines an inner passageway. However, it may be possible to provide embodiments in which there is no inner passageway. The metal-air cell 40 is disposed in a conduit 48 which is part of the generator device comprising the metal-air cell 40. Thus, in the embodiments shown in Figure 3b, it is the outer wall of the tubular structure formed by the air cathode 42 and the walls of the conduit 48 which define a passageway along which gases can flow in order to interact with the air cathode 42. A plurality of metal-air cells might be disposed in a conduit in this manner. Figure 3c shows a further embodiment of a metal-air cell, depicted generally at 50, in which the metal-air cell 50 is disposed against a wall 52 of the manifold arrangement, with these two structures acting together to form and define an inner passageway along which gases can flow. In the embodiments shown in Figure 3c, the metal-air cell 50 is of domed or substantially hemispherical cross-sectional form, wherein the air cathode 54 forms an inner wall of the domed structure and thereby is in communication with gases flowing along the inner passageway. The anode 56 acts as an outer wall of the structure, and an electrolyte/separator 58 is disposed between the anode 56 and the air cathode 54. It will be appreciated that the manifold arrangement and the metal-air cell can take many different cross-sectional forms in order to provide a combination which defines an inner passageway along which gases can flow.

Figure 4 is a schematic diagram of an aircraft 60 having a plurality of jet engines 62 and a plurality of fuel tanks 64. An air bleed 66 is taken from an engine compressor of one of the jet engines and is used as a feed gas supply to a gas generator 68 of the invention. The bleed air may be cooled and compressed as necessary prior to introduction into the gas generator 68. Oxygen produced by the gas generation 68 is circulated around the aircraft 60 via an oxygen supply system 70. Oxygen depleted air is introduced into the fuel tank 64 using an oxygen depleted air supply system 72. Additional gas generators and/or air bleeds might be provided as required.

## Claims

1. A gaseous product generator (10) including:
at least one rechargeable metal-air cell (12) operable to provide the gaseous product; and
a manifold arrangement, the manifold arrangement having an inlet structure (14, 18), an outlet structure (16, 20) and one or more valves (14a, 16a, 18a, 20a), the inlet structure (14, 18) allowing a feed atmosphere to be introduced to the metal-air cell (12), the outlet structure (16, 20) transporting the gaseous product to an intended point of use (70, 64) thereby to provide an environmentally enhancing function and the one or more valves (14a, 16a, 18a, 20a) controlling the supply of gas to the metal-air cell (12) and/or the transportation of gaseous product from the metal-air cell.

2. A generator according to claim 1, in which the rechargeable metal-air cell is a rechargeable lithium-air cell (12).

3. A generator according to claim 1 or 2, in which the manifold arrangement includes an oxygen supply system (70) for supplying oxygen generated by charging the metal-air cell to an intended point of use.

4. A generator according to any of claims 1 to 3, in which at least a portion of the outlet structure of the manifold is in the form of an oxygen depleted feed atmosphere outlet (72) for transporting an oxygen depleted feed atmosphere generated by discharging the metal-air cell to an intended point of use (64).

5. A generator according to any preceding claim, further including a valve control system (22) for controlling the operation of the valves (14a, 16a, 18a, 20a).

6. A generator according to any preceding claim, including a plurality of metal-air cells (12) and a metal-air cell control system which is configured to control the operation of the metal-air cells so that, when one metal-air cell is charging, at least one other metal-air cell is discharging.

7. A generator according to any preceding claim, in which the rechargeable metal-air cell (12) includes an elongate air cathode (26) which, either wholly or in combination with the manifold arrangement (14, 18, 16, 20), defines an elongate passageway along which gases can flow during charging and discharging of the metal-air cell.

8. An aircraft (60) including a gaseous product generator (10) according to any preceding claim.

9. An aircraft (60) according to claim 8, in which the gaseous product is oxygen produced by charging the metal-air cell (12) and the manifold arrangement (70) transports the oxygen to a pre-determined location on-board the aircraft for breathing purposes.

10. An aircraft (60) according to claim 8, in which the gaseous product is an oxygen depleted atmosphere produced by discharging the metal-air cell (12) and the manifold arrangement (72) transports the oxygen depleted atmosphere to a pre-determined location (64) on-board the aircraft for atmosphere inerting purposes.

11. A method of generating a gaseous product including the steps of:
providing at least one rechargeable metal-air cell (12);
operating the metal-air cell to generate a gaseous product;
transporting the gaseous product to an intended point of use and providing an environmentally enhancing function with the gaseous product.

12. A method according to claim 11, in which the metal-air cell (12) is disposed on an aircraft (60), and the environmentally enhancing function is provided on-board the aircraft.

13. A method according to claim 11 or 12, in which the gaseous product is oxygen, the metal-air cell (12) is charged in order to provide the oxygen, and the environmentally enhancing function is the provision of oxygen in a pre-determined location for breathing purposes.

14. A method according to any of claims 11 to 13, in which the gaseous product is an oxygen-depleted atmosphere, the metal-air cell (12) is discharged in order to provide the oxygen-depleted atmosphere, and the environmentally enhancing function is the inerting of the atmosphere in a pre-determined location.

15. A method according to any of claims 11 to 14, including the step of storing the gaseous product prior to the provision of the environmentally enhancing function thereof.

## Patentansprüche

1. Generator (10) für gasförmige Produkte, wobei der Generator Folgendes enthält:
wenigstens eine nachladbare Metall-Luft-Zelle (12), die zum Bereitstellen des gasförmigen Produkts betreibbar ist; und
eine Verteileranordnung, wobei die Verteileranordnung eine Einlassstruktur (14, 18), eine Auslassstruktur (16, 20) und eines oder mehrere Ventile (14a, 16a, 18a, 20a) aufweist, wobei die Einlassstruktur (14, 18) ermöglicht, dass in die Metall-Luft-Zelle (12) eine Zufuhratmosphäre eingeleitet wird, wobei die Auslassstruktur (16, 20) das gasförmige Produkt zu einem beabsichtigten Verwendungspunkt (70, 64) transportiert und dadurch eine Umgebungsverbesserungsfunktion bereitstellt und wobei das eine oder die mehreren Ventile (14a, 16a, 18a, 20a) die Zufuhr von Gas zu der Metall-Luft-Zelle (12) und/oder den Transport des gasförmigen Produkts von der Metall-Luft-Zelle steuern.

2. Generator nach Anspruch 1, wobei die nachladbare Metall-Luft-Zelle eine nachladbare Lithium-Luft-Zelle (12) ist,

3. Generator nach Anspruch 1 oder 2, wobei die Verteileranordnung ein Sauerstoffzufuhrsystem (70) zum Zuführen von durch Laden der Metall-Luft-Zelle erzeugtem Sauerstoff zu einem beabsichtigten Verwendungspunkt enthält.

4. Generator nach einem der Ansprüche 1 bis 3, wobei wenigstens ein Abschnitt der Auslassstruktur des Verteilers die Form eines Auslasses (72) für eine sauerstoffabgereicherte Zufuhratmosphäre, um eine durch Entladen der Metall-Luft-Zelle erzeugte sauerstoffabgereicherte Zufuhratmosphäre zu einem beabsichtigten Verwendungspunkt (64) zu transportieren, ist.

5. Generator nach einem vorhergehenden Anspruch, der ferner ein Ventilsteuersystem (22) zum Steuern des Betriebs der Ventile (14a, 16a, 18a, 20a) enthält.

6. Generator nach einem vorhergehenden Anspruch, der mehrere Metall-Luft-Zellen (12) und ein Metall-Luft-Zellen-Steuersystem, das dafür konfiguriert ist, den Betrieb der Metall-Luft-Zellen in der Weise zu steuern, dass wenigstens eine andere Metall-Luft-Zelle entladen wird, wenn eine Metall-Luft-Zelle geladen wird, enthält.

7. Generator nach einem vorhergehenden Anspruch, wobei die nachladbare Metall-Luft-Zelle (12) eine langgestreckte Luftkatode (26) enthält, die entweder gänzlich oder zusammen mit der Krümmeranordnung (14, 18, 16, 20) einen langgestreckten Durchlass definiert, entlang dessen Gase während des Ladens und Entladens der Metall-Luft-Zelle strömen können.

8. Flugzeug (60), das einen Generator (10) für gasförmige Produkte nach einem vorhergehenden Anspruch enthält.

9. Flugzeug (60) nach Anspruch 8, wobei das gasförmige Produkt Sauerstoff ist, der durch Laden der Metall-Luft-Zelle (12) erzeugt wird, und wobei die Verteileranordnung (70) den Sauerstoff für Atmungszwecke zu einem vorgegebenen Ort an Bord des Flugzeugs transportiert.

10. Flugzeug (60) nach Anspruch 8, wobei das gasförmige Produkt eine sauerstoffabgereicherte Atmosphäre ist, die durch Entladen der Metall-Luft-Zelle (12) erzeugt wird, und wobei die Verteileranordnung (72) die sauerstoffabgereicherte Atmosphäre zu Atmosphäreninertisierungszwecken zu einem vorgegebenen Ort (64) an Bord des Flugzeugs transportiert.

11. Verfahren zum Erzeugen eines gasförmigen Produkts, wobei das Verfahren die folgenden Schritte enthält:
Bereitstellen wenigstens einer nachladbaren Metall-Luft-Zelle (12);
Betreiben der Metall-Luft-Zelle zum Erzeugen eines gasförmigen Produkts;
Transportieren des gasförmigen Produkts zu einem beabsichtigten Verwendungspunkt und Bereitstellen einer Umgebungsverbesserungsfunktion mit dem gasförmigen Produkt.

12. Verfahren nach Anspruch 11, wobei die Metall-Luft-Zelle (12) in einem Flugzeug (60) angeordnet ist und wobei die Umgebungsverbesserungsfunktion an Bord des Flugzeugs vorgesehen ist.

13. Verfahren nach Anspruch 11 oder 12, wobei das gasförmige Produkt Sauerstoff ist, wobei die Metall-Luft-Zelle (12) geladen wird, um den Sauerstoff bereitzustellen, und wobei die Umgebungsverbesserungsfunktion die Bereitstellung von Sauerstoff an einem vorgegebenen Ort für Atmungszwecke ist.

14. Verfahren nach einem der Ansprüche 11 bis 13, wobei das gasförmige Produkt eine sauerstoffabgereicherte Atmosphäre ist, wobei die Metall-Luft-Zelle (12) entladen wird, um die sauerstoffabgereicherte Atmosphäre bereitzustellen, und wobei die Umgebungsverbesserungsfunktion das Inertisieren der Atmosphäre an einem vorgegebenen Ort ist.

15. Verfahren nach einem der Ansprüche 11 bis 14, das den Schritt des Speicherns des gasförmigen Produkts vor der Bereitstellung seiner Umgebungsverbesserungsfunktion enthält.

## Revendications

1. Générateur de produits gazeux (10), comprenant:
au moins une pile métal-air rechargeable (12) activable pour fournir le produit gazeux; et
un agencement de collecteur, l'agencement de collecteur comprenant une structure d'entrée (14, 18), une structure de sortie (16, 20) et une ou plusieurs soupape(s) (14a, 16a, 18a, 20a), la structure d'entrée (14, 18) permettant d'introduire une atmosphère d'alimentation dans la pile métal-air (12), la structure de sortie (16, 20) transportant le produit gazeux jusqu'à un point d'utilisation prévu (70, 64), remplissant de ce fait une fonction d'amélioration environnementale, et ladite/lesdites une ou plusieurs soupape(s) (14a, 16a, 18a, 20a) commandant la fourniture de gaz à la pile métal-air (12) et/ou le transport du produit gazeux à partir de la pile métal-air.

2. Générateur selon la revendication 1, dans lequel la pile métal-air rechargeable est une pile lithium-air rechargeable (12).

3. Générateur selon la revendication 1 ou 2, dans lequel l'agencement de collecteur comprend un système de fourniture d'oxygène (70) pour fournir de l'oxygène généré en chargeant la pile métal-air en un point d'utilisation prévu.

4. Générateur selon l'une quelconque des revendications 1 à 3, dans lequel au moins une partie de la structure de sortie du collecteur se présente sous la forme d'une sortie d'atmosphère d'alimentation appauvrie en oxygène (72) pour transporter une atmosphère d'alimentation appauvrie en oxygène en déchargeant la pile métal-air en un point d'utilisation prévu (64).

5. Générateur selon l'une quelconque des revendications précédentes, comprenant en outre un système de commande de soupapes (22) pour commander le fonctionnement des soupapes (14a, 16a, 18a, 20a).

6. Générateur selon l'une quelconque des revendications précédentes, comprenant une pluralité de piles métal-air (12) et un système de commande de piles métal-air qui est configuré de manière à commander le fonctionnement des piles métal-air, de telle sorte que, lorsqu'une pile métal-air est en charge, au moins une autre pile métal-air soit en décharge.

7. Générateur selon l'une quelconque des revendications précédentes, dans lequel la pile métal-air rechargeable (12) comprend une cathode d'air allongée (26) qui, soit seule soit en combinaison avec l'agencement de collecteur (14, 16, 18, 20) définit un passage allongé le long duquel des gaz peuvent s'écouler pendant la charge et la décharge de la pile métal-air.

8. Avion (60) comprenant un générateur de produits gazeux (10) selon l'une quelconque des revendications précédentes.

9. Avion (60) selon la revendication 8, dans lequel le produit gazeux est de l'oxygène produit en chargeant la pile métal-air (12), et l'agencement de collecteur (70) transporte l'oxygène jusqu'à un endroit prédéterminé à bord de l'avion à des fins de respiration.

10. Avion (60) selon la revendication 8, dans lequel le produit gazeux est une atmosphère appauvrie en oxygène qui est produite par la décharge de la pile métal-air (12), et l'agencement de collecteur (72) transporte l'atmosphère appauvrie en oxygène jusqu'à un endroit prédéterminé (64) à bord de l'avion à des fins d'inertisation de l'atmosphère.

11. Procédé de génération d'un produit gazeux, comprenant les étapes suivantes:
prévoir au moins une pile métal-air rechargeable (12);
activer la pile métal-air pour générer un produit gazeux; et
transporter le produit gazeux jusqu'à un point d'utilisation prévu et exécuter une fonction d'amélioration environnementale avec le produit gazeux.

12. Procédé selon la revendication 11, dans lequel la pile métal-air (12) est disposée sur un avion (60), et la fonction d'amélioration environnementale est réalisée à bord de l'avion.

13. Procédé selon la revendication 11 ou 12, dans lequel le produit gazeux est l'oxygène, la pile métal-air (12) est chargée dans le but de fournir de l'oxygène, et la fonction d'amélioration environnementale est la fourniture d'oxygène en un endroit prédéterminé à des fins de respiration.

14. Procédé selon l'une quelconque des revendications 11 à 13, dans lequel le produit gazeux est une atmosphère appauvrie en oxygène, la pile métal-air (12) est déchargée dans le but de fournir l'atmosphère appauvrie en oxygène, et la fonction d'amélioration environnementale est l'inertisation de l'atmosphère en un endroit prédéterminé.

15. Procédé selon l'une quelconque des revendications 11 à 14, comprenant l'étape de stockage du produit gazeux avant l'exécution de la fonction d'amélioration environnementale de celle-ci.
